# EUROPÄISCHE PATENTSCHRIFT

(11) **EP 1 814 263 B1**
(45) Veröffentlichungstag und Bekanntmachung des Hinweises auf die Patenterteilung: **20.04.2011**
(21) Anmeldenummer: 07106256.6
(22) Anmeldetag: 23.12.2000
(51) Int. Cl.: H04L 12/40, H04J 3/06

(54) **Verfahren und Vorrichtung zum Austausch von Daten zwischen wenigstens Zwei mit einem Bussystem verbundenen Teilnehmern**
Method and device for data exchange between at least two users connected via a bus system
Procédé et dispositif destinés à l'échange de données entre au moins deux participants connectés à un système de bus

(30) Priorität: 05.01.2000 DE 10000302
(43) Veröffentlichungstag der Anmeldung: 01.08.2007
(62) Teilanmeldung aus: 00991122.3
(73) Patentinhaber: ROBERT BOSCH GMBH, 70442 Stuttgart (DE)
(72) Erfinder: Weigl, Andreas, 76351, Linkenheim-Hochstetten (DE); Fuehrer, Thomas, 70839, Gerlingen (DE); Mueller, Bernd, 70839, Gerlingen (DE); Hartwich, Florian, 72762, Reutlingen (DE); Hugel, Robert, 76199, Karlsruhe (DE); Baeuerle, Peter, 71636, Ludwigsburg (DE)

(56) Entgegenhaltungen:
- WO-A-98/54872
- DE-A- 19 620 137
- US-A- 5 742 239
- PELLER M ET AL: "byteflight specification Version 0.5 Draft" INTERNET CITATION, [Online] 29. Oktober 1999 (1999-10-29), XP002201782 Gefunden im Internet: URL:http://www.byteflight.com/specificatio n/default.htm> [gefunden am 2002-06-07]

## Beschreibung

### Stand der Technik

Die Erfindung betrifft Verfahren und Vorrichtung zum Austausch von Daten zwischen wenigstens zwei mit einem Bussystem verbundenen Teilnehmern gemäß den Merkmalen der unabhängigen Ansprüche.

Als Stand der Technik in der automobilen Vernetzung wird seit einigen Jahren das CAN-Protokoll eingesetzt. Die Kommunikation ist dort ereignisgesteuert geregelt. Sehr große Lasten können erzeugt werden, wenn das Senden verschiedener Nachrichten zur gleichen Zeit initiiert werden soll. Der nicht-destruktive Arbitrierungsmechanismus von CAN garantiert, dass sequentielle Senden aller Nachrichten gemäß der Priorität ihrer Identifier bzw. Kennungen. Für harte Echtzeitsysteme muss vorab eine Analyse der Laufzeiten und Buslasten für das gesamte System gemacht werden, um sicher zu gehen, dass alle Nachrichten-Deadlines eingehalten werden können (selbst unter Spitzenbelastung).

Es gibt bereits Kommunikationsprotokolle, die auf einer zeitgesteuerten Abarbeitung basieren, wie z.B. TTP/C oder Interbus-S. Die Besonderheit hierbei ist, dass der Buszugriff bereits vorab durch Vergabe von Sendezeitpunkten geplant wird. Während der Laufzeit kann es somit zu keinen Kollisionen kommen. Ebenso wird aber eine Spitzenlast am Kommunikationsbus vermieden. Dabei ist der Bus also häufig nicht vollständig ausgelastet.

Zeitlich determinierte Kommunikationssysteme lassen einen vorherbestimmbaren Ablauf der Prozesse zu. Es ist deshalb möglich, die Applikation mit der Kommunikation in einem engeren Zeitbereich als in einem arbitrierenden System zu synchronisieren. Bei einer rein zyklisch ablaufenden Kommunikation ist aber die Applikation starr an das zeitliche Raster gebunden, wohingegen bei bestimmten Betriebsabläufen, insbesondere der Motorsteuerung in einem Fahrzeug, eine zeitlich veränderliche Nachrichten- bzw. Datenübertragung, insbesondere der Messwerte angepasst an die Drehzahl, nötig ist.

Dokument XP002201782, PELLER M ET AL: "byteflight specification Version 0.5 Draft", offenbart ein Verfahren zum Austausch von Daten in Nachrichten zwischen zwei Teilnehmern. Der erste Teilnehmer überträgt wiederholt eine Referenznachricht in einem vorgebbaren zeitlichen Abstand über den Bus, wobei eine Referenznachricht und die nachfolgenden Zeitfenster bis zur nächsten Referenznachricht zu einem ersten Zyklus zusammengefasst werden.

Es zeigt sich, dass der Stand der Technik nicht in jeder Hinsicht optimale Ergebnisse zu liefern vermag.

### Vorteile der Erfindung

Die Erfindung beinhaltet somit ein Verfahren nach Anspruch 1 und eine Vorrichtung nach Anspruch 9 zum Austausch von Daten in Nachrichten zwischen wenigstens zwei Teilnehmern, welche mittels eines Bussystems verbunden sind.

Dabei wird als zugrundeliegendes Bussystem bzw. Busprotokoll insbesondere zweckmäßigerweise der CAN-Bus eingesetzt. Die Erfindung bezieht sich aber allgemein auf jedes Bussystem bzw. Busprotokoll bei welchem eine objektorientierte Nachrichten- bzw. Datenübertragung eingesetzt wird, also die Nachricht und/oder die darin enthaltenen Daten durch eine Kennung (Identifier) eindeutig erkennbar sind. Dies gilt für alle Busse bei denen also nicht die Teilnehmer sondern die Nachrichten bzw. deren Daten adressiert werden, insbesondere den CAN-Bus.

Die Erfindung umfasst vorteilhafterweise somit gegenüber dem Stand der Technik eine höhere Protokollschicht zu dem eigentlichen Bus(CAN)-Protokoll, das im Rahmen der erfindungsgemäßen zeitgesteuerten Kommunikation unverändert erhalten bleibt. Die zeitgesteuerte Kommunikation erlaubt es somit vorteilhafterweise, den Bus voll auszulasten und gleichzeitig die Latenzzeiten für jede Nachricht auf einem definierten Wert zu halten.

Die Erfindung umfasst also eine zyklisch ablaufende Übertragung von Bus(CAN)-Nachrichten. Dadurch wird ein deterministisches und zusammensetzbares Kommunikationssystem erzeugt. Ein solches System wird bei dieser Erfindung im Weiteren als TTCAN bezeichnet. Ebenso wird im Weiteren von einem CAN-Bus ausgegangen, wobei wie oben genannt die Überlegungen allgemein für alle Bussysteme bzw. Busprotokolle mit objektorientierter Nachrichtenübertragung gelten.

Zweckmäßigerweise werden also die Referenznachricht und die nachfolgenden Zeitfenster bis zur nächsten Referenznachricht zu einem ersten Zyklus vorgebbarer Länge und/oder vorgebbarer Struktur zusammengefasst, wobei die Struktur der Länge, Anzahl und zeitlichen Position der auf die Referenznachricht folgenden Zeitfenster in dem zeitlichen Abstand entspricht.

Weiterhin werden vorteilhafterweise mehrere erste Zyklen gleicher Struktur zu einem zweiten Zyklus zusammengefasst, wobei in dem zweiten Zyklus auch Nachrichten in Zeitfenstern wiederholt übertragen werden, deren zeitlicher Abstand größer ist als die zeitliche Länge des ersten Zyklus.

Zweckmäßigerweise kann in wenigstens einem Zeitfenster des ersten oder des zweiten Zyklus eine zyklische Nachrichtenübertragung unterbleiben. In diesen zunächst leeren Zeitfenstern können dann arbitrierende Nachrichten übertragen werden, also solche, die nicht zyklisch übertragen werden müssen sondern wenn z.B. bestimmte Abläufe beendet sind zur Verfügung stehen.

Vorteilhafterweise leitet der erste Teilnehmer bei einer Start-Anforderung, insbesondere durch den zweiten Teilnehmer, einen ersten Zyklus ein.

Die Stop-Anforderung und/oder die Start-Anforderung erfolgt von einer bezüglich des Bussystems externen Vorrichtung welche zu diesem Zweck mit dem ersten Teilnehmer in Verbindung steht.

In einer vorteilhaften Ausführungsform wird der wenigstens zweite Teilnehmer oder die externe Vorrichtung zur Applikation eingesetzt.

Somit wird vorteilhafterweise ein zeitlich determinierter Kommunikationsablauf mit externen Ereignissen der Applikation abgestimmt. Beispielhaft sei hier die winkelsynchrone Verarbeitung der Messwerte in der Motorsteuerung, die über ein zeitgesteuertes Kommunikationssystem erfasst werden, genannt.

Zeitlich determinierte Kommunikationssysteme lassen einen vorherbestimmbaren Ablauf der Prozesse zu. Es ist deshalb möglich, die Applikation mit der Kommunikation in einem engeren Zeitbereich als in einem arbitrierenden System zu synchronisieren. Bei einer rein zyklisch ablaufenden Kommunikation ist aber die Applikation starr an das zeitliche Raster gebunden. Im Falle des Beispiels einer Motorsteuerung sind hingegen zeitlich veränderliche, der Dynamik der Drehzahländerung angepasste Messwertübertragungen nötig. Dies kann vorteilhafterweise erreicht werden, indem der zyklische Kommunikationsablauf unterbrechbar ist und auf ein externes Ereignis hin definiert wieder gestartet werden kann.

Weiterhin von Vorteil ist die schnelle Erkennung von ausgefallenen Teilnehmern bzw. Knoten (Applikation erwartet Botschaften in einem festen Zeitbezug zum Ereignis)

Weitere Vorteile und vorteilhafte Ausgestaltungen ergeben sich aus der Beschreibung und den Merkmalen der Ansprüche.

### Zeichnung

Die Erfindung wird nachfolgend anhand der in der Zeichnung enthaltenen Figuren dargestellt.

Dabei zeigt:
- Figur 1: schematisch ein Bussystem mit mehreren Teilnehmern.
- In Figur 2: ist der prinzipielle Ablauf der ersten Zyklen oder Basiszyklen und der zweiten Zyklen, der Gesamtzyklen über der Zeit dargestellt.
- Figur 3: veranschaulicht im Detail die Anlage und Nachrichtenbelegung der Zeitfenster.
- In Figur 4: wird dann ein Gesamtzyklus mit 7 Basiszyklen und diversen Sendegruppen der Nachrichten sowie arbitrierender Nachrichten dargestellt.
- Figur 5: zeigt in einer Gegenüberstellung eine zyklische Nachichtenübertragung gemäß den Figuren 2 und 4 und die ereignissynchronisierte, zyklische Nachrichtenübertragung.

### Beschreibung der Ausführungsbeispiele

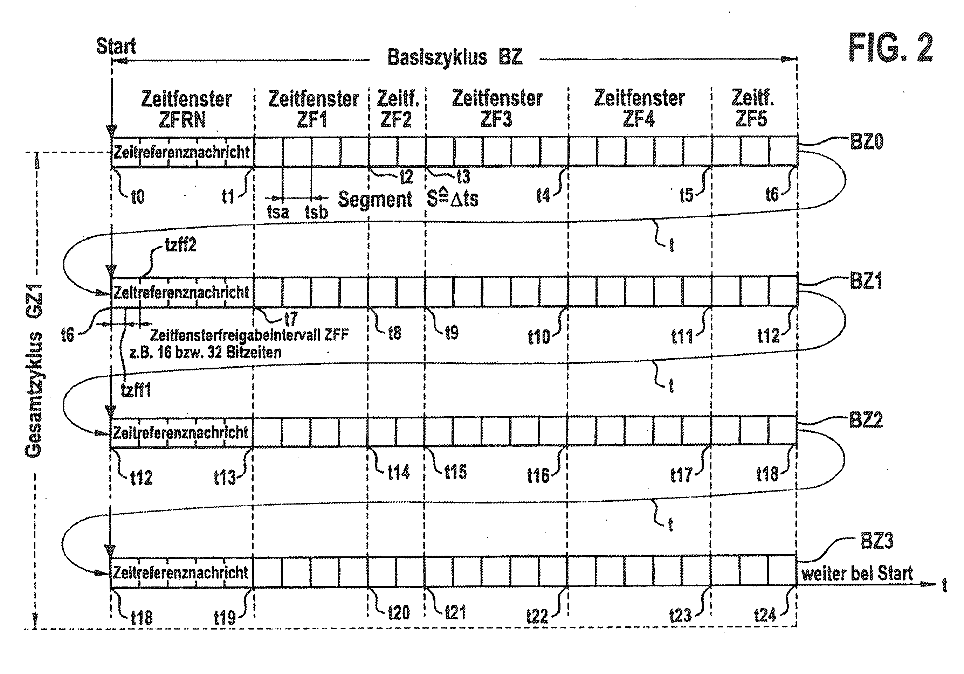

TTCAN basiert im wesentlichen auf einer zeitgesteuerten, periodischen Kommunikation, die durch einen Zeitgeber (Knoten, Teilnehmer) mit Hilfe einer Zeitreferenznachricht, oder kürzer Referenznachricht RN getaktet wird. Die Periode bis zur nächsten Referenznachricht RN wird als Basiszyklus bezeichnet und unterteilt sich in n Zeitfenster (siehe Figur 2). Jedes Zeitfenster erlaubt das exklusive Senden einer periodischen Nachricht mit unterschiedlicher Länge. Diese periodischen Nachrichten werden in einem TTCAN-Controller durch Verwendung von Zeitmarken, die mit dem Ablauf einer logischen relativen Zeit gekoppelt sind, gesendet. TTCAN erlaubt aber auch die Berücksichtigung von freien Zeitfenstern. Diese Zeitfenster können für sogenannte spontane Nachrichten genutzt werden, wobei der Zugriff innerhalb dieser Zeitfenster auf den Bus über das Arbitrierungsschema von CAN genutzt wird (arbitrierende Nachrichten). Die Synchronisation der Zeitgeber-Uhr (Globale Zeit gZ) mit der internen lokalen Zeit der einzelnen Knoten IZ1 bis IZ4 wird berücksichtigt und effizient umgesetzt.

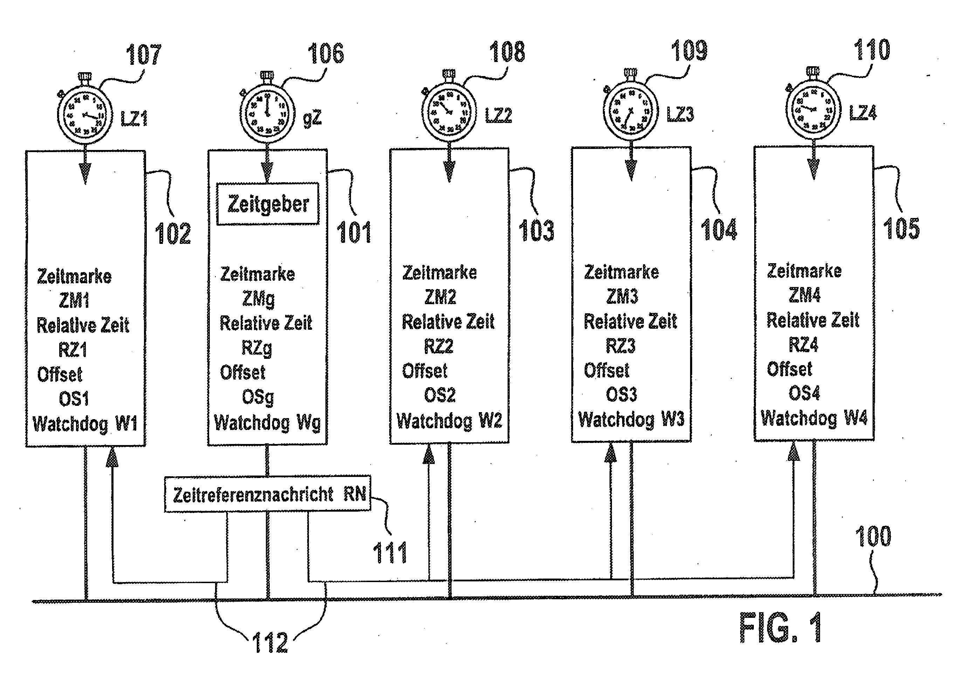

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein internes Mittel, wie eine Uhr, Zähler, Taktgenerator, etc. oder extern zu dem jeweiligen Teilnehmer übertragen werden kann. Die jeweilige lokale Zeitbasis IZ1 bis IZ4 ist insbesondere ein Zähler, z.B. 16-bit aufwärtszählend, der lediglich durch einen HW-Reset beeinflusst werden darf. Die lokale Zeitbasis ist hier in jedem Knoten bzw. Teilnehmer 102 bis 105 implementiert. Ein Teilnehmer, der Zeitgeber, 101 besitzt dabei ein exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit IZ (IZ1 bis IZ4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit IZ (IZ1 bis IZ4) und dem lokalen Offset OS1 bis OS4 und OSg wenn OSg ≠ 0. Der Fall, dass OSg nicht Null ist, tritt z.B. auf wenn die globale Zeit gZ von außen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

### Lokale Zeitbasis und die Globale Zeit

Lokale Zeitbasis: Die lokale Zeitbasis ist ein Zähler, z.B. 16-bit aufwärtszählend, der lediglich durch einen HW-Reset beeinflusst werden darf. Die lokale Zeitbasis ist in jedem Knoten implementiert.

Referenzmarken Zwischenregister: Bei jedem angenommenen SOF wird das Zwischenregister mit der lokalen Zeitbasis geladen.

Referenzmarker: Wird die aktuelle Nachricht als Referenznachricht erkannt, dann wird der Wert aus dem Zwischenregister in den Referenzmarker übernommen (als lokale Referenzmarke). Der Referenzmarker wird z.B. als 16-Bit Register ausgelegt.

Zeitgeber-Referenzmarke: Das ist die von den Zeitnehmern empfangene Referenzmarke des Zeitgebers in der Referenznachricht.

Lokaler Offset zur Globalen Zeit: Der lokale Offset zur Globalen Zeit ist die Differenz zwischen der Referenzmarke im Zwischenregister und der in der Referenznachricht empfangenen Globalen Zeitmarke. Er wird zur Berechnung der Globalen Zeit aus der lokalen Zeit verwendet.
Der Offset des Zeitgebers selbst bleibt konstant. In der Referenznachricht sendet der Zeitgeber seine lokale Referenzmarke plus lokalem Offset.

Der Zeitgeber 101 ist also auch derjenige Knoten bzw. Teilnehmer, der die Zeitreferenznachricht 111 bzw. kürzer die Referenznachricht RN aussendet. Der Pfeil 112 zeigt an, dass die Referenznachricht RN 111 an die übrigen Teilnehmer 102 bis 105, insbesondere zeitgleich, versendet wird.

Die Referenznachricht RN ist die Basis für den zeitgesteuerten, periodischen Betrieb von TTCAN. Sie ist durch einen speziellen Identifier, eine spezielle Kennung, eindeutig gekennzeichnet und wird von allen Knoten, hier 102 bis 105, als Taktgeber empfangen. Sie wird von dem Zeitgeber 101 prinzipiell zyklisch ausgesendet. Die Referenznachricht kann folgende Daten beinhalten: Die Nummer des aktuellen Basiszyklus BZn, die Referenzmarke des Zeitgebers in Globaler Zeit.

Die Referenzmarke entsteht durch die Übernahme des internen Zählerstandes zum Zeitpunkt des "Start of Frame"-Bits (SOF) beim Empfang der Referenznachricht des Zeitgebers. Die Referenzmarke ist somit eine Momentaufnahme der lokalen Zeitbasis zum Empfangszeitpunkt der Referenznachricht.
Die in den Teilnehmern aufgeführte Relative Zeit RZ1 bis RZ4 und RZg ist die Differenz zwischen der lokalen Zeitbasis und der letzten Referenzmarke. Alle Definitionen bezüglich der verwendeten Zeitmarken beziehen sich auf die Relative Zeit eines einzelnen Teilnehmers. Sie kann z.B. permanent als Signal vorliegen (z.B. durch Verknüpfung der beiden Registerwerte über Gatter). Die Referenzmarke bestimmt die Relative Zeit aller Knoten am TTCAN-Bus.

Der ebenfalls dargestellte Watchdog Wg und W1 bis W4 ist ein spezieller relativer Zeitpunkt. In jedem Knoten wird ein solcher relativer Zeitpunkt (Watchdog) definiert, zu dem spätestens eine neue Referenznachricht und somit auch Referenzmarke erwartet wird. Der Watchdog stellt somit eine spezielle Zeitmarke dar. Der Watchdog dient vor allem in der Initialisierung und Reinitialisierung zur Überwachung, ob überhaupt eine Kommunikation zustande gekommen ist. Der Watchdog sollte in diesem Fall immer größer sein als der Abstand zwischen den Referenznachrichten.

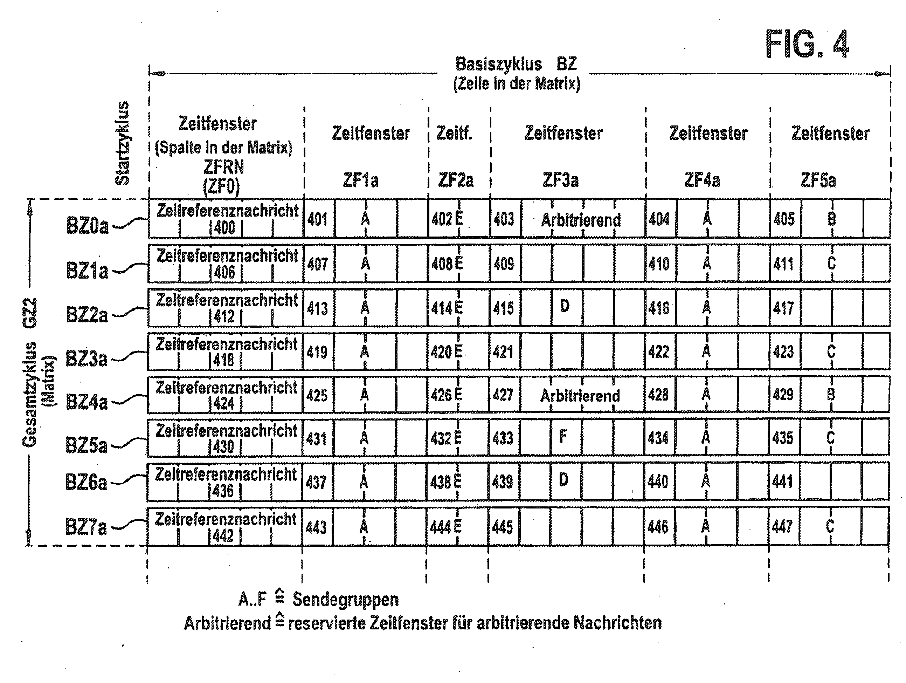

Dabei ist Eine Zeitmarke ein relativer Zeitpunkt, der die Beziehung zwischen der Relativen Zeit und einer Aktion im ursprünglichen Bus(CAN)-Controller herstellt. Eine Zeitmarke ist als Register dargestellt, wobei ein Controller mehrere Zeitmarken verwalten kann. Einer Nachricht können mehrere Zeitmarken zugeordnet sein (siehe z.B. in Figur 4: Sendegruppe A kommt sowohl in Zeitfenster ZF1a, als auch in Zeitfenster ZF4a vor).

Bezüglich der Applikation wird insbesondere ein Applikationswatchdog bedient. Dieser Watchdog muss von der Applikation regelmäßig bedient werden, um dem TTCAN-Controller den ordnungsgemäßen Betrieb zu signalisieren. Nur wenn dieser Watchdog bedient wird, werden die Nachrichten vom CAN-Controller gesendet.

Figur 2 zeigt das Prinzip der zeitgesteuerten, periodischen Nachrichten- bzw. Datenübertragung über der Zeit. Diese Nachrichtenübertragung wird durch den Zeitgeber mit Hilfe der Referenznachricht getaktet. Der Zeitraum t0 bis t6 wird dabei als Basiszyklus BZ bezeichnet und in k Zeitfenster (k ∈ IN) unterteilt. Dabei werden von t0 bis t1, t6 bis t7, t12 bis t13 und t18 bis t19 also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF5, also deren Länge (in Segmenten S mit Δts = tsb - tsa), deren Anzahl und deren zeitlichen Position, ist vorgebbar. Dadurch lässt sich aus mehreren Basiszyklen gleicher Struktur ein Gesamtzyklus GZ1 bilden, der bei t0 beginnt und bei t24 endet um erneut durchlaufen zu werden. Die Zeitfenster umfassen z.B. 2 bis 5 Segmente mit beispielsweise je 32 Bitzeiten. Die Anzahl der Zeitfenster ist beispielsweise 2 bis 16, wobei auch nur ein Zeitfenster oder mehr als 16 möglich wären. Die Anzahl der Basiszyklen in einem Gesamtzyklus ist beispielsweise 2^{m} mit insbesondere m ≤ 4.

Mit tzff1 und tzff2 sind beispielhaft zwei Sendefreigabeintervalle bzw. Zeitfensterfreigabeintervalle gekennzeichnet, welche z.B. 16 oder 32 Bitzeiten dauern und den Zeitrahmen beschreiben innerhalb dessen mit dem Senden der Nachricht bezüglich des Basiszyklus begonnen werden darf.

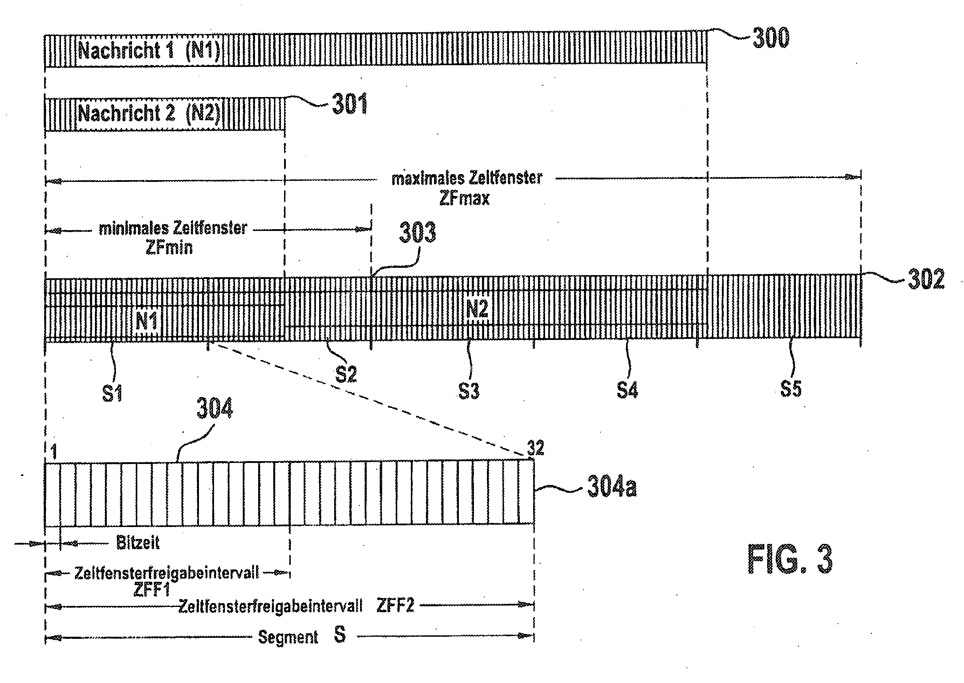

Jedes Zeitfenster erlaubt das exklusive Senden einer periodischen Nachricht mit unterschiedlicher Länge. In Figur 3 sind beispielhaft zwei Nachrichten unterschiedlicher Länge und die Zuordnung im Zeitfenster dargestellt. Nachricht 1 (N1) als Block 300 beinhaltet z.B. 130 Bit und Nachricht 2 (N2) als Block 301 beispielsweise 47 Bit.

Wie schon erwähnt können maximale und minimale Zeitfenster, abhängig von der Nachrichtenlänge vorgegeben werden, hier in diesem Beispiel z.B. zwischen 2 und 5 Segmenten pro Zeitfenster. Somit wird ein maximales Zeitfenster ZFmax als Block 302, das 5 Segmente (S1 bis S5) mit je 32 Bitzeiten umfasst und ein minimales Zeitfenster ZFmin als Block 303, welches 2 Segmente (S1 und S2) mit je 32 Bitzeiten umfasst vorgegeben. In diesen werden die Nachrichten N1 und N2 übertragen, wobei die Nachrichten also die Zeitfenster nicht vollständig ausfüllen müssen, vielmehr werden die Zeitfenstergrößen entsprechend der Nachrichtenlänge vorgegeben. ZFmax muss somit ausreichend Zeit bzw. Platz für die längste mögliche Nachricht, z.B.130 Bit bzw. Bitzeiten bieten und ZFmin kann an die kürzest mögliche Nachricht, z.B. 47 Bit, angepasst werden.

Generell ist das Zeitfenster der Zeitrahmen der für eine bestimmte Nachricht zur Verfügung steht (siehe Figur 3). Das Zeitfenster einer Nachricht wird mit dem Anliegen der Sendefreigabe geöffnet und der Beginn dieses Fensters stimmt prinzipiell mit einer definierten Zeitmarke überein. Die Länge des Zeitfensters wird aus i Segmenten mit beispielsweise 32 Bitzeiten (vgl. Block 304a) bestimmt. Die Segmentierung zu insbesondere 32 Bitzeiten stellt dabei eine HW-freundliche Größe dar. Das Zeitfenster darf nicht kürzer sein, als die längste in diesem Zeitfenster vorkommende Nachricht. Die Bitzeit ist insbesondere die nominale CAN-Bitzeit.

Das Sendefreigabeintervall oder Zeitfensterfreigabeintervall beschreibt den Zeitrahmen, innerhalb dessen mit dem Senden der Nachricht begonnen werden darf. Das Sendefreigabeintervall ist ein Teil des Zeitfensters. Die Freigabe liegt also im Intervall Zeitmarke und Zeitmarke plus Delta an. Der Wert Delta ist deutlich kleiner als die Länge des Zeitfensters (z.B. 16 oder 32 Bitzeiten für ZFF1 oder ZFF2). Eine Nachricht deren Beginn nicht innerhalb des Sendefreigabeintervalls liegt, darf nicht gesendet werden.

Figur 4 stellt nun einen Gesamtzyklus (Sendematrix) GZ2 dar. Gesamtzyklus (Sendematrix): Alle Nachrichten (RN, A bis F und arbitrierend) aller Teilnehmer werden als Komponenten einer Sendematrix organisiert (siehe Figur 4). Die Sendematrix besteht aus einzelnen Basiszyklen BZ0a bis BZ7a. Alle Basiszyklen des Gesamtzyklus GZ2 haben die gleiche Struktur. Diese Basiszyklen können wahlweise aus exklusiven (A bis F) und arbitrierenden Komponenten aufgebaut sein. Die Gesamtzahl der Zeilen (also Basiszyklen BZ0a bis BZ7a) ist hier eine Zahl 2^{m} = 8 mit m = 3.

Ein Basiszyklus (Zeile der Sendematrix) beginnt mit einer Referenzmarke in der Referenznachricht RN und besteht aus mehreren (i) aufeinander folgenden Zeitfenstern definierter Länge (erstes Zeitfenster ZF0 bzw. ZFRN für RN). Die Anordnung der Nachrichten innerhalb des Basiszyklus kann frei festgelegt werden. Ein Zeitfenster wird für exklusive Komponenten mit einem CAN Nachrichtenobjekt verknüpft. Ein Zeitfenster kann auch frei gelassen werden (409, 421, 441, 417, 445) oder für arbitrierende Komponenten genutzt werden (403, 427).

Eine Sendegruppe (Spalte der Sendematrix, A bis F) bilden Nachrichten, die immer im gleichen Zeitfenster, aber in unterschiedlichen Basiszyklen gesendet werden (siehe Figur 4). Somit kann eine Periode aufgebaut werden, z.B. A in ZF1a und ZF4a: 401, 407, 413, 419, 425, 431, 437, 443 und 404, 410, 416, 422, 428, 434, 440, 446. Innerhalb einer Sendegruppe kann ein Nachrichtenobjekt (eines Zeitfensters) mehrfach gesendet werden. Die Periode einer Nachricht innerhalb einer Sendegruppe muss eine Zahl 2^{l} sein, wobei gilt: I <= m.

Das Nachrichtenobjekt bzw. die Nachricht entspricht dem Nachrichtenobjekt des Busses, insbesondere in CAN, und umfasst den Identifier bzw. die Kennung sowie die Daten selbst. In TTCAN wird das Nachrichtenobjekt um wenigstens eine der folgenden Eintragungen, bevorzugter Weise um alle drei, in der Sendematrix ergänzt: Zeitfenster, Basismarke, Wiederholrate.

Das Zeitfenster ist die Position (ZF0, ZF1a bis ZF5a) im Basiszyklus (BZn, Zeile der Sendematrix). Der Beginn des Zeitfensters ist definiert durch Erreichen einer bestimmten Zeitmarke.

Die Basismarke gibt an, in welchem Basiszyklus (BZ0a bis BZ7a) im Gesamtzyklus die Nachricht erstmalig gesendet wird.

Die Wiederholrate definiert nach wie vielen Basiszyklen diese Übertragung wiederholt wird.

Um die Gültigkeit eines Nachrichtenobjekts für den CAN-Controller zu kennzeichnen, gibt es ein "permanentes Senderequest", das eine permanente Freigabe des Objekts bedeutet (für exklusive Komponenten siehe unten) und ein "einzelnes Senderequest", das eine einmalige Gültigkeit des Objekts bedeutet (für arbitrierende Komponenten siehe unten).

Die automatische Retransmission aus CAN ist für die Nachrichten in TTCAN zweckmäßigerweise ausgeschaltet.

Im weiteren wird nun nochmals die Nachrichtenübertragung - Periodische Nachrichten und Spontane Nachrichten im Basiszyklus bzw. im Gesamtzyklus, insbesondere bezüglich der Applikation, beschrieben. Dabei werden wieder exklusive Nachrichten also periodische Nachrichten und arbitrierende also spontane Nachrichten unterschieden.

### Exklusive Nachrichtenobjekte (periodische Nachrichten):

Exklusive Nachrichtenobjekte werden gesendet, wenn der Applikationswatchdog gesetzt ist, die "permanente Sendeanforderung" der Applikation an den CAN-Controller gesetzt ist und das Sendefreigabeintervall des zugehörigen Zeitfensters geöffnet ist. In diesem Fall stimmt die Zeitmarke für das Nachrichtenobjekt mit der Relativen Zeit überein. Die permanente Sendeanforderung bleibt gesetzt, bis sie von der Applikation selbst zurückgesetzt wird.

### Arbitrierende Nachrichtenobjekte (spontane Nachrichten):

Arbitrierende Nachrichtenobjekte werden gesendet, wenn der Applikationswatchdog gesetzt ist, die "einzelne Sendeanforderung" von der Applikation an den CAN-Controller gesetzt ist und das Sendefreigabeintervall des nächsten dafür bestimmten Zeitfensters geöffnet ist. Dann ist die Zeitmarke für dieses Zeitfenster gleich der Relativen Zeit. Die Sendeanforderung wird nach erfolgreichem Senden vom CAN-Controller zurückgesetzt. Der gleichzeitige Zugriff verschiedener spontaner Nachrichten wird über die Bitarbitrierung von CAN geregelt. Verliert eine spontane Nachricht in diesem Zeitfenster gegen eine andere spontane Nachricht, so kann sie erst im nächsten dafür bestimmten Zeitfenster wieder um den Buszugang kämpfen.

Wird die gesamte Sendematrix bzw. der Gesamtzyklus durchlaufen, so ergibt sich eine zyklische, zeitgesteuerte Nachrichtenübertragung. Zeitgesteuert bedeutet, dass jede Aktion vom Erreichen eines bestimmten Zeitpunkts ausgeht (siehe Zeitmarken und Relative Zeit). Ist der Gesamtzyklus vollständig durchlaufen, d.h. alle Basiszyklen wurden einmal abgearbeitet, so wird wieder mit dem ersten Basiszyklus der Sendematrix begonnen. Es entstehen keine zeitlichen Lücken im Übergang. Ein Überblick eines solchen zeitgesteuerten Kommunikationssystems mit Zeitgeber ist in der Beschreibung und den Figuren der Zeichnung dargestellt worden.

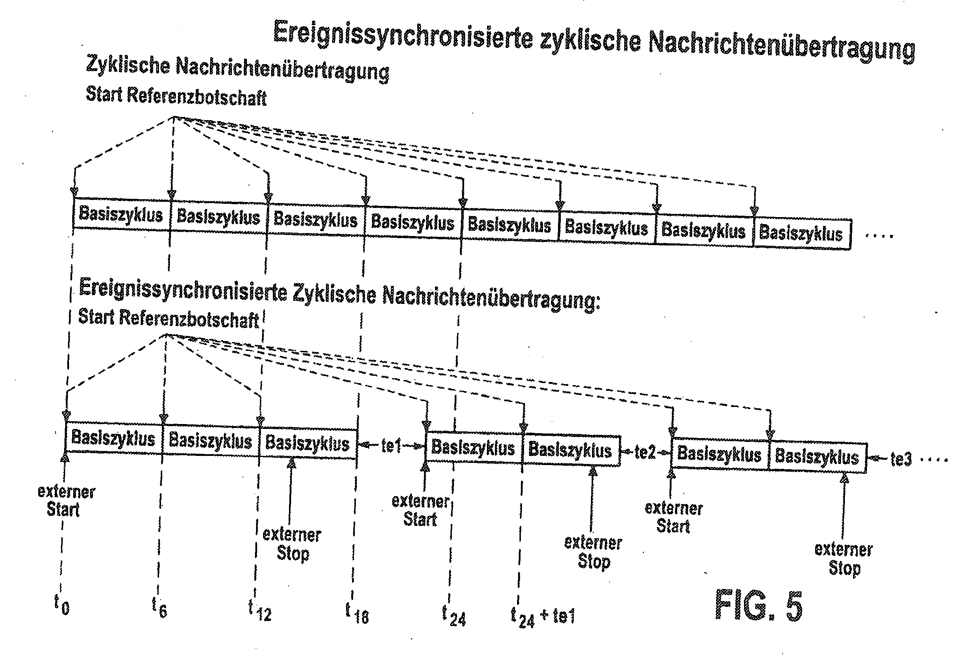

Figur 5 zeigt in einer Gegenüberstellung eine zyklische Nachrichtenübertragung gemäß den Figuren 2 und 4 und die ereignissynchronisierte, zyklische Nachrichtenübertragung. Dabei sind die Zeitpunkte des Starts eines Basiszyklus mit t0, t6, t12, t18, t24 bzw. t24+te1 bezeichnet. Die te1, te2 und te3 stellen die Unterbrechungszeiten durch die Ereignissynchronisation dar. Die Begriffe Zeitreferenznachricht, Referenznachricht, Referenzbotschaft und Zeitreferenzbotschaft sind dabei gleichbedeutend.

Ein zeitlich determinierter Kommunikationsablauf soll mit externen Ereignissen der Applikation abgestimmt werden. Beispiel ist die winkelsynchrone Verarbeitung der Messwerte in der Motorsteuerung, die über ein zeitgesteuertes Kommunikationssystem erfasst werden.

Zeitlich determinierte Kommunikationssysteme lassen einen vorherbestimmbaren Ablauf der Prozesse zu. Es ist deshalb möglich, die Applikation mit der Kommunikation in einem engeren Zeitbereich als in einem arbitrierenden System zu synchronisieren. Bei einer rein zyklisch ablaufenden Kommunikation ist aber die Applikation starr an das zeitliche Raster gebunden. Im Falle des Beispiels einer Motorsteuerung sind hingegen zeitlich veränderliche, der Dynamik der Drehzahländerung angepasste Messwertübertragungen nötig. Dies kann erreicht werden, indem der zyklische Kommunikationsablauf unterbrechbar ist und auf ein externes Ereignis hin definiert wieder gestartet werden kann.

Ein Kommunikations- (TTCAN-) Controller, der Zeitgeber ist, wird in die Lage versetzt, auf eine Anforderung insbesondere der Applikation hin, die zyklische Kommunikation am Ende eines Basiszyklus zu unterbrechen und bei Eintreffen eines Start-Signals bzw. Start-Anforderung der Applikation die Kommunikation mit einem neuen Basiszyklus wieder aufzunehmen. Abhängig davon, ob die Unterbrechungsanforderung bzw. Stop-Anforderung bestehen bleibt oder zurückgenommen wurde, wird nur ein Basiszyklus ausgeführt oder die zyklische Kommunikation so lange fortgesetzt, bis wieder eine Unterbrechungsanforderung kommt. Unabhängig zu welchem Zeitpunkt innerhalb eines Basiszyklus die Anforderung kommt, wird dieser zu Ende geführt. Folgt nach der Unterbrechungsanforderung noch innerhalb des gleichen Basiszyklus ein Start-Signal, so wird die Kommunikation nicht unterbrochen.

Für eine eindeutige Zuordnung von externem Ereignis und Kommunikation sollte der Abstand vorteilhafterweise zwischen zwei externen Ereignissen größer oder gleich der Länge eines Basiszyklus sein oder ein Basiszyklus kleiner als der minimale externe Synchronisationsabstand.

Die Überwachung durch einen Watchdog, der die Referenzbotschaft erwartet, sollte zweckmäßigerweise auf die maximale Länge der Lücke zwischen den Basiszyklen abgestimmt werden.

## Patentansprüche

1. Verfahren zum Austausch von Daten in Nachrichten zwischen wenigstens zwei Teilnehmern (101-105), welche mittels eines Bussystems (100) verbunden sind, wobei die, die Daten enthaltenden Nachrichten durch die Teilnehmer über das Bussystem übertragen werden und die Nachrichten durch einen ersten Teilnehmer (101) zeitlich derart gesteuert werden, dass der erste Teilnehmer wiederholt eine Referenznachricht (RN) in wenigstens einem vorgebbaren zeitlichen Abstand (t1-t6) über den Bus überträgt und der zeitliche Abstand in Zeitfenster (ZF1-ZF5) vorgebbarer Länge unterteilt wird, wobei die Nachrichten in den Zeitfenstern übertragen werden, wobei eine Referenznachricht und die nachfolgenden Zeitfenster bis zur nächsten Referenznachricht zu einem ersten Zyklus (BZ) zusammengefasst werden, **dadurch gekennzeichnet, dass** die Übertragung abhängig von einer bezüglich des Bussystems externen Anforderung am Ende eines ersten Zyklus unterbrochen wird.

2. Verfahren nach Anspruch 1, **dadurch** gekenntzeichnet, dass der erste Teilnehmer (101) bei einer Start-Anforderung einen ersten Zyklus (BZ) einleitet.

3. Verfahren nach Anspruch 1, **dadurch gekennzeichnet, dass** eine Referenznachricht (RN) und die nachfolgenden Zeitfenster (ZF1-ZF5) bis zur nächsten Referenznachricht zu einem ersten Zyklus (BZ) vorgebbarer Länge und/oder vorgebbarer Struktur zusammengefasst werden, wobei die Struktur der Länge, Anzahl und zeitliche Position der auf die Referenznachricht folgenden Zeitfenster in dem zeitlichen Abstand entspricht.

4. Verfahren nach Anspruch 1 oder 3, **dadurch gekennzeichnet, dass** mehrere erste Zyklen (BZO-BZ3) gleicher Struktur zu einem zweiten Zyklus (GZ1) zusammengefasst werden, wobei in dem zweiten Zyklus auch Nachrichten, deren zeitlicher Abstand größer ist als die zeitliche Länge des ersten Zyklus (BZ) in Zeitfenstern wiederholt übertragen werden, wobei die Struktur der Länge, Anzahl und zeitliche Position der auf die Referenznachricht folgenden Zeitfenster in dem zeitlichen Abstand entspricht.

5. Verfahren nach Anspruch 1, **dadurch gekennzeichnet dass** als externe Anforderung eine Stop-Anforderung und/oder eine Start-Anforderung von einer bezüglich des Bussystems externen Vorrichtung erfolgt, welche zu diesem Zweck mit dem ersten Teilnehmer in Verbindung steht.

6. Verfahren nach Anspruch 1, **dadurch gekennzeichnet, dass** der wenigstens zweite Teilnehmer oder eine zum Bussystem externe Vorrichtung zur Applikation eingesetzt wird.

7. Verfahren nach einem der vorhergehenden Ansprüche 1 bis 3, **dadurch gekennzeichnet, dass** in wenigstens einem Zeitfenster des ersten Zyklus eine zyklische Nachrichtenübertragung unterbleibt und in diesem Zeitfenster arbitrierende Nachrichten übertragen werden.

8. Verfahren nach einem der vorhergehenden Ansprüche 1 bis 3, **dadurch gekennzeichnet, dass** mehrere erste Zyklen gleicher Struktur zu einem zweiten Zyklus zusammengefasst werden und dass in wenigstens einem Zeitfenster des zweiten Zyklus eine zyklische Nachrichtenübertragung unterbleibt und in diesem Zeitfenster arbitrierende Nachrichten übertragen werden.

9. Vorrichtung mit einem Bussystem (100) und wenigstens zwei Teilnehmern (101-105) zum Austausch von Daten in Nachrichten zwischen den wenigstens zwei Teilnehmern, welche mittels des Bussystems verbunden sind, wobei die, die Daten enthaltenden Nachrichten durch die Teilnehmer über das Bussystem übertragen werden und die Nachrichten durch einen ersten Teilnehmer (101) zeitlich derart gesteuert werden, dass der erste Teilnehmer wiederholt eine Referenznachricht (RN) in wenigstens einem vorgebbaren zeitlichen Abstand (t1-t6) über den Bus überträgt und der zeitliche Abstand in Zeitfenster (ZF1-ZF5) vorgebbarer Länge unterteilt wird, wobei die Nachrichten in den Zeitfenstern übertragen werden, wobei eine Referenznachricht und die nachfolgenden Zeitfenster bis zur nächsten Referenznachricht zu einem ersten Zyklus (BZ) zusammengefasst werden, **dadurch gekennzeichnet, dass** die Übertragung abhängig von einer bezüglich des Bussystems externen Anforderung am Ende eines ersten Zyklus unterbrochen wird.

10. Vorrichtung nach Anspruch 9, **dadurch gekennzeichnet, dass** diese derart gestaltet ist, dass mit ihr ein Verfahren gemäß einem der Ansprüche 1 bis 7 ausgeführt wird.

## Claims

1. Method for the interchange of data in messages between at least two subscribers (101-105) which are connected by means of a bus system (100), wherein the messages containing the data are transmitted by the subscribers via the bus system and the timing of the messages is controlled by a first subscriber (101) such that the first subscriber repeatedly transmits a reference message (RN) via the bus in at least one prescribable interval of time (t1-t6) and the interval of time is divided into time windows (ZF1-ZF5) of prescribable length, wherein the messages are transmitted in the time windows, wherein a reference message and the subsequent time windows up to the next reference message are combined to form a first cycle (BZ), **characterized in that** the transmission is interrupted on the basis of a request which is external to the bus system at the end of a first cycle.

2. Method according to Claim 1, **characterized in that** the first subscriber (101) initiates a first cycle (BZ) upon a start request.

3. Method according to Claim 1, **characterized in that** a reference message (RN) and the subsequent time windows (ZF1-ZF5) up to the next reference message are combined to form a first cycle (BZ) of prescribable length and/or of prescribable structure, wherein the structure corresponds to the length, number and position in time of the time windows following the reference message in the interval of time.

4. Method according to Claim 1 or 3, **characterized in that** a plurality of first cycles (BZO-BZ3) having the same structure are combined to form a second cycle (GZ1), wherein the second cycle is also used to repeatedly transmit messages for which the interval of time is greater than the temporal length of the first cycle (BZ) in time windows, wherein the structure corresponds to the length, number and position in time of the time windows following the reference message in the interval of time.

5. Method according to Claim 1, **characterized in that** the external request made is a stop request and/or a start request from an apparatus which is external to the bus system and which, for this purpose, is connected to the first subscriber.

6. Method according to Claim 1, **characterized in that** the at least second subscriber or an apparatus which is external to the bus system is used for the application.

7. Method according to one of the preceding Claims 1 to 3, **characterized in that** cyclic message transmission is not performed in at least one time window of the first cycle, and this time window is used to transmit arbitrating messages.

8. Method according to one of the preceding Claims 1 to 3, **characterized in that** a plurality of first cycles having the same structure are combined to form a second cycle and **in that** cyclic message transmission is not performed in at least one time window of the second cycle, and this time window is used to transmit arbitrating messages.

9. Apparatus having a bus system (100) and at least two subscribers (101-105) for the interchange of data in messages between the at least two subscribers, which are connected by means of the bus system, wherein the messages containing the data are transmitted by the subscribers via the bus system and the timing of the messages is controlled by a first subscriber (101) such that the first subscriber repeatedly transmits a reference message (RN) via the bus in at least one prescribable interval of time (t1-t6) and the interval of time is divided into time windows (ZF1-ZF5) of prescribable length, wherein the messages are transmitted in the time windows, wherein a reference message and the subsequent time windows up to the next reference message are combined to form a first cycle (BZ), **characterized in that** the transmission is interrupted on the basis of a request which is external to the bus system at the end of a first cycle.

10. Apparatus according to Claim 9, **characterized in that** said apparatus is designed such that it is used to carry out a method according to one of Claims 1 to 7.

## Revendications

1. Procédé pour échanger des données dans des messages entre au moins deux abonnés (101 - 105) qui sont reliés au moyen d'un système de bus (100), les messages contenant les données étant transmis par les abonnés sur le système de bus et les messages étant commandés dans le temps par un premier abonné (101) de telle sorte que le premier abonné transmette de manière répétée un message de référence (RN) pendant au moins un intervalle de temps (t1 - t6) pouvant être prédéfini sur le bus et l'intervalle de temps étant divisé en créneaux temporels (ZF1 - ZF5) de longueur pouvant être prédéfinie, les messages étant transmis dans les créneaux temporels, un message de référence et les créneaux temporels suivants jusqu'au message de référence suivant étant regroupés en un premier cycle (BZ), **caractérisé en ce que** la transmission est interrompue à la fin d'un premier cycle en fonction d'une demande externe en rapport avec le système de bus.

2. Procédé selon la revendication 1, **caractérisé en ce que** le premier abonné (101) initie un premier cycle (BZ) en présence d'une demande de démarrage.

3. Procédé selon la revendication 1, **caractérisé en ce qu'**un message de référence (RN) et les créneaux temporels suivants (ZF1 - ZF5) jusqu'au message de référence suivant sont regroupés en un premier cycle (BZ) de longueur pouvant être prédéfinie et/ou de structure pouvant être prédéfinie, la structure correspondant à la longueur, à l'intervalle et à la position dans le temps du créneau temporel suivant le message de référence dans l'intervalle de temps.

4. Procédé selon la revendication 1 ou 3, **caractérisé en ce que** plusieurs premiers cycles (BZO - BZ3) de structure identique sont regroupés en un deuxième cycle (GZ1), des messages dont l'intervalle de temps est plus grand que la durée du premier cycle (BZ) étant également transmis de manière répétée dans des créneaux temporels dans le deuxième cycle, la structure correspondant à la longueur, à l'intervalle et à la position dans le temps du créneau temporel suivant le message de référence dans l'intervalle de temps.

5. Procédé selon la revendication 1, **caractérisé en ce que** la demande externe a lieu sous la forme d'une demande d'arrêt et/ou d'une demande de démarrage par un dispositif externe en rapport avec le système de bus, lequel est à cet effet en liaison avec le premier abonné.

6. Procédé selon la revendication 1, **caractérisé en ce que** l'au moins un deuxième abonné ou un dispositif externe au système de bus est utilisé pour l'application.

7. Procédé selon l'une des revendications précédentes 1 à 3, **caractérisé en ce qu'**une transmission cyclique des messages est inhibée dans au moins un créneau temporel du premier cycle et des messages d'arbitrage sont transmis dans ce créneau temporel.

8. Procédé selon l'une des revendications précédentes 1 à 3, **caractérisé en ce que** plusieurs premiers cycles de structure identique sont regroupés en un deuxième cycle et **en ce qu'**une transmission cyclique des messages est inhibée dans au moins un créneau temporel du deuxième cycle et des messages d'arbitrage sont transmis dans ce créneau temporel.

9. Dispositif comprenant un système de bus (100) et au moins deux abonnés (101 - 105) pour échanger des données dans des messages entre les au moins deux abonnés, lesquels sont reliés au moyen du système de bus, les messages contenant les données étant transmis par les abonnés sur le système de bus et les messages étant commandés dans le temps par un premier abonné (101) de telle sorte que le premier abonné transmette de manière répétée un message de référence (RN) pendant au moins un intervalle de temps (t1 - t6) pouvant être prédéfini sur le bus et l'intervalle de temps étant divisé en créneaux temporels (ZF1 - ZF5) de longueur pouvant être prédéfinie, les messages étant transmis dans les créneaux temporels, un message de référence et les créneaux temporels suivants jusqu'au message de référence suivant étant regroupés en un premier cycle (BZ), **caractérisé en ce que** la transmission est interrompue à la fin d'un premier cycle en fonction d'une demande externe en rapport avec le système de bus.

10. Dispositif selon la revendication 9, **caractérisé en ce que** celui-ci est configuré de telle sorte qu'un procédé selon l'une des revendications 1 à 7 soit mis en oeuvre avec lui.
